# FASCICULE DE BREVET EUROPEEN

(11) **EP 3 802 087 B1**
(45) Date de publication et mention de la délivrance du brevet: **06.07.2022**
(21) Numéro de dépôt: 19727949.0
(22) Date de dépôt: 20.05.2019
(51) Int. Cl.: B29D 30/58, B29D 30/60, B29D 30/14, B29D 30/66

(54) **PROCÉDÉ DE FABRICATION D'UN BANDAGE PNEUMATIQUE À BLOCS DE SCULPTURE RENFORCÉS**
VERFAHREN ZUR HERSTELLUNG EINES REIFENS MIT VERSTÄRKTEN PROFILBLÖCKEN
METHOD FOR MANUFACTURING A TYRE WITH REINFORCED TREAD BLOCKS

(30) Priorité: 29.05.2018 FR 1854594
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: ROUBY, Mickael, 63040 Clermond Ferrand Cedex 9 (FR); MONNEREAU, Patrice, 63040 Clermond Ferrand Cedex 9 (FR); BESSAC, Christophe, 63040 Clermond Ferrand Cedex 9 (FR)
(74) Mandataire: Roussy, Delphine
(86) Numéro de dépôt international: PCT/EP2019/062961
(87) Numéro de publication internationale: WO 2019/228840

(56) Documents cités:
- JP-A- 2011 037 415
- JP-A- 2013 237 283
- US-A- 2 710 042

## Description

### DOMAINE TECHNIQUE DE L'INVENTION

La présente invention se rapporte à un procédé de fabrication d'un bandage pneumatique à blocs de sculpture renforcés permettant de limiter le basculement des blocs de sculpture.

### ARRIÈRE-PLAN TECHNIQUE DE L'INVENTION

L'intégration d'un renfort pendant la confection d'une bande de roulement dans un procédé de fabrication centralisé n'est pas envisageable économiquement, car lors de l'assemblage de ces produits semi-finis composites, les chutes induites ne sont pas recyclables, c'est-à-dire deviennent des pertes de matière sans possibilité de réutilisation.

Il a déjà été proposé, dans la demande WO 2016/184692, un moule pour la vulcanisation d'un bandage pneumatique permettant, pendant l'étape de vulcanisation, l'enfouissement d'un renfort textile dans la bande de roulement selon une forme en voûte imposée par des formes complémentaires du moule. L'enfouissement est rendu possible par la perméabilité du renfort textile par rapport à la gomme utilisée lors de l'étape de vulcanisation. Toutefois, ces formes complémentaires rendent le moule associé complexe et impose une géométrie particulière de la sculpture de la bande de roulement.

Le document JP 2013 237283 A propose la fabrication d'un bandage pneumatique comprenant les étapes de positionnement d'une nappe de renfort, suivie d'une réticulation pendant la vulcanisation.

### RÉSUMÉ DE L'INVENTION

L'invention a pour but de proposer un nouveau procédé de fabrication plus simple et plus économique à mettre en oeuvre pour obtenir un bandage pneumatique à blocs de sculpture renforcés.

À cet effet, l'invention se rapporte à un procédé de fabrication d'un bandage pneumatique comportant les étapes suivantes :
- Positionner une nappe de renfort dans un matériau caoutchoutique comportant des rainures de façon que la nappe de renfort s'étende à travers les rainures ;
- Réticuler tout en moulant à chaud le bandage pneumatique à base de matériau caoutchoutique cru en poussant la nappe de renfort contre le fond des rainures.

Le procédé de fabrication selon l'invention permet d'obtenir un bandage pneumatique dont les blocs de sculpture de la bande de roulement sont rigidifiés afin de limiter leur déformation ce qui permet d'améliorer le comportement et l'usure du bandage pneumatique.

En effet, de manière inattendue grâce au procédé selon l'invention, la nappe de renfort prend une forme de voûte dans les blocs de sculpture sans forme dédiée du moule ou de la couche de rigidification ce qui permet une rigidification sensiblement équivalente à celle décrite dans le document WO 2016/184692 sans utiliser son moule complexe ou sa géométrie de sculpture imposée. On comprend donc que le bandage pneumatique obtenu comporte des caractéristiques similaires à celles décrites dans le document WO 2016/184692 à l'aide d'un procédé plus simple et plus économique. De plus, les chutes éventuelles générées lors du procédé de fabrication sont entièrement recyclables.

L'invention peut également comporter l'une ou plusieurs des caractéristiques optionnelles suivantes, prises seules ou en combinaison.

Selon une première possibilité, le procédé de fabrication comportant les étapes suivantes :
- Fabriquer une carcasse à base de matériau caoutchoutique cru ;
- Monter sur la carcasse, une ébauche de bande de roulement à base de matériau caoutchoutique cru comprenant le matériau caoutchoutique comportant les rainures ;
- Monter sur l'ébauche de bande de roulement, une couche de rigidification comportant du matériau caoutchoutique cru et la nappe de renfort afin de former un bandage pneumatique à base de matériau caoutchoutique cru, la nappe de renfort étant intercalée entre le matériau caoutchoutique de l'ébauche de bande de roulement et le matériau caoutchoutique de la couche de rigidification.

Selon cette première possibilité, les rainures sont formées dans l'ébauche de la bande de roulement. On comprend donc que la nappe de renfort peut donc être directement montée en recouvrement des rainures de l'ébauche de la bande de roulement ce qui permet de simplifier la fabrication de la couche de rigidification.

En outre, le principe de positionner la nappe de renfort avant de terminer la bande de roulement permet d'avoir une profondeur maitrisée dans l'épaisseur de la bande de roulement. De ce fait, la nappe de renfort n'a pas à respecter une perméabilité particulière par rapport à la gomme lors de l'étape de vulcanisation.

Selon un premier mode de réalisation, l'étape de montage de la couche de rigidification comporte les phases suivantes :
- Fabriquer le matériau caoutchoutique cru et la nappe de renfort ;
- Monter la nappe de renfort sur l'ébauche de bande de roulement ;
- Monter le matériau caoutchoutique cru sur au moins une partie de la nappe de renfort.

Ce premier mode de réalisation permet le montage matériau par matériau sur l'ébauche de la bande de roulement. Ce premier mode de réalisation est le plus simple et le plus économique à mettre en oeuvre.

Selon un deuxième mode de réalisation, l'étape de montage de la couche de rigidification comporte les phases suivantes :
- Fabriquer le matériau caoutchoutique cru et la nappe de renfort ;
- Assembler le matériau caoutchoutique cru sur au moins une partie de la nappe de renfort pour former une couche de rigidification composite ;
- Monter la couche de rigidification composite sur l'ébauche de bande de roulement.

Ce deuxième mode de réalisation permet la préparation à part de la couche de rigidification pour ensuite être montée sur l'ébauche de bande de roulement.

Selon un troisième mode de réalisation, l'étape de montage de la couche de rigidification comporte les phases suivantes :
- Fabriquer le matériau caoutchoutique cru et la nappe de renfort ;
- Monter la nappe de renfort sur l'ébauche de bande de roulement ;
- Monter, par roulages successifs de bandelettes, le matériau caoutchoutique cru sur au moins une partie de la nappe de renfort.

Ce troisième mode de réalisation permet l'utilisation d'un procédé du type « strip winding » qui permet, par roulages successifs de bandelettes, de former très précisément une structure comportant de la gomme crue et/ou des éléments filaires par empilements successifs.

Selon une deuxième possibilité, du matériau caoutchoutique cru peut également être prévu entre la nappe et l'ébauche de la bande de roulement. On comprend donc que les rainures ne sont pas formées dans l'ébauche de la bande de roulement mais dans la partie inférieure de la couche de rigidification. On comprend donc que les effets et avantages de l'invention sont obtenus de manière équivalente à celle de la première possibilité. Bien entendu, les trois modes de réalisation, variantes et combinaison de variantes pourrait être adaptés à cette deuxième possibilité.

Quel que soit le mode de réalisation ou la possibilité, la couche de rigidification peut être montée de sorte qu'elle ne comporte pas de matériau caoutchoutique cru à l'aplomb des rainures de l'ébauche de la bande de roulement afin de maximiser la poussée de la couche de rigidification par le moule au fond des rainures.

Quel que soit le mode de réalisation ou la possibilité, la nappe de renfort peut comporter des fibres à base de polymères afin de rigidifier les futurs blocs de sculpture du bandage pneumatique tout en gardant une souplesse suffisante afin de mettre en oeuvre la poussée de la couche de rigidification lors de l'étape de moulage à chaud.

Selon une première variante, l'étape de montage sur la carcasse de l'ébauche de bande de roulement comporte les phases suivantes :
- Fabriquer au moins un matériau caoutchoutique cru ;
- Monter le matériau caoutchoutique cru sur la carcasse afin de former l'ébauche de bande de roulement.

Cette première variante permet d'utiliser des moyens habituels de fabrication pour former l'ébauche de la bande de roulement. On comprend que l'ébauche aura préférentiellement une épaisseur plus faible qu'habituellement afin de former, avec la couche de rigidification, l'épaisseur finale de la bande de roulement avant l'étape de moulage à chaud.

Selon une deuxième variante, l'étape de montage sur la carcasse de l'ébauche de bande de roulement comporte les phases suivantes :
- Fabriquer au moins un matériau caoutchoutique cru ;
- Monter, par roulages successifs de bandelettes, le matériau caoutchoutique cru sur la carcasse afin de former l'ébauche de bande de roulement.

Cette deuxième variante permet d'utiliser l'utilisation d'un procédé du type « strip winding » qui permet, par roulages successifs de bandelettes, de former très précisément une structure comportant de la gomme crue et/ou des éléments filaires par empilements successifs. On comprend que l'ébauche aura préférentiellement une épaisseur plus faible qu'habituellement afin de former avec la couche de rigidification, l'épaisseur finale de la bande de roulement avant l'étape de moulage à chaud.

On comprend également que l'ensemble de la bande de roulement crue avant l'étape de réticulation et de moulage du bandage pneumatique cru peut être obtenue en continue à l'aide du procédé du type « strip winding », c'est-à-dire aussi bien l'étape de montage de l'ébauche de bande de roulement que l'étape de montage de la couche de rigidification.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- La figure 1 est une vue en perspective d'une étape de montage d'une couche de rigidification selon un premier mode de réalisation du procédé selon l'invention ;
- La figure 2 est une vue schématique en coupe de l'étape de montage d'une couche de rigidification selon le premier mode de réalisation du procédé selon l'invention ;
- La figure 3 est une vue schématique d'une étape de réticulation et de moulage à chaud d'un bandage pneumatique du procédé selon l'invention ;
- La figure 4 est une vue schématique en coupe d'une bande de roulement d'un bandage pneumatique obtenu selon le procédé de l'invention ;
- La figure 5 est une vue schématique en coupe d'une étape de montage d'une couche de rigidification selon un deuxième mode de réalisation du procédé selon l'invention ;
- La figure 6 est une vue schématique en coupe d'une étape de montage d'une couche de rigidification selon un troisième mode de réalisation du procédé selon l'invention.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

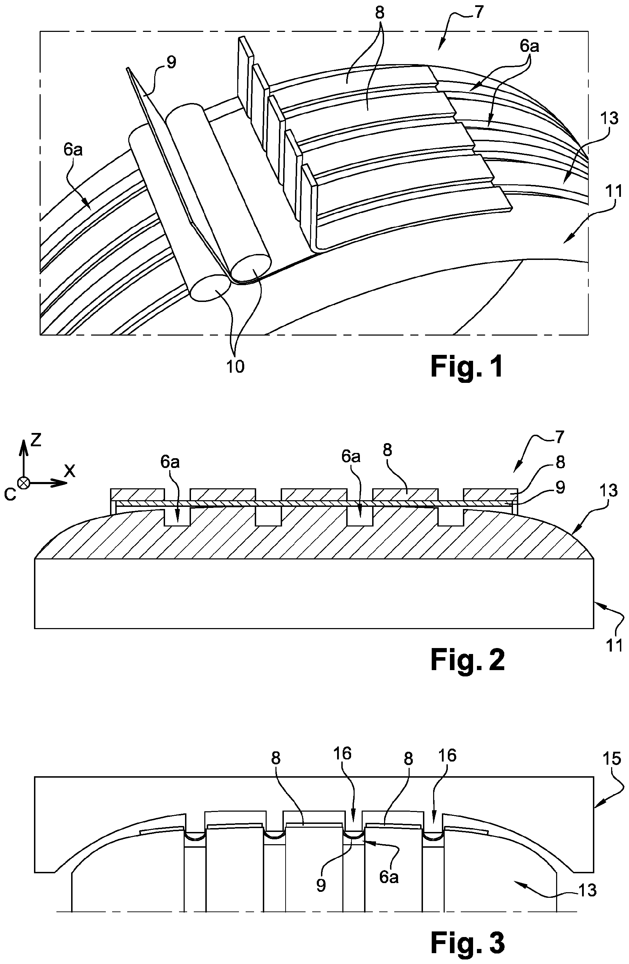

Sur les figures 2, 5 et 6, on a représenté des axes C, X, Z orthogonaux entre eux correspondant aux orientations habituelles circonférentielle (C), axiale (X) et radiale (Z) d'un bandage pneumatique 1. Par « bandage pneumatique », on entend tous les types de bandages élastiques soumis à une pression interne.

Par « matériau caoutchoutique », ou « gomme », on entend un matériau à base d'une composition réticulable comprenant un élastomère, par exemple diénique. On appelle « matériau caoutchoutique cru » ou « gomme crue » un tel matériau avant réticulation.

Par « carcasse », on entend toute partie n'appartenant pas à la bande de roulement.

Par « bande de roulement », on entend une quantité de matériau caoutchoutique délimitée par des surfaces latérales et par deux surfaces principales dont l'une, appelée surface de roulement, est destinée à entrer en contact avec une chaussée lorsque le bandage pneumatique roule.

L'invention a pour but de proposer un nouveau procédé de fabrication plus simple et plus économique à mettre en oeuvre pour obtenir un bandage pneumatique à blocs de sculpture renforcés.

L'invention s'applique à tout type de bandage pneumatique, notamment ceux destinés à équiper des véhicules à moteur de type tourisme, SUV (« Sport Utility Vehicles »), deux roues (notamment motos), avions, véhicules industriels choisis parmi camionnettes, « Poids-lourds » - c'est-à-dire métro, bus, engins de transport routier (camions, tracteurs, remorques), véhicules hors-la-route tels qu'engins agricoles ou de génie civil -, ou autres véhicules de transport ou de manutention. L'invention s'applique également aux véhicules non motorisés comme notamment une remorque, une semi-remorque ou une caravane.

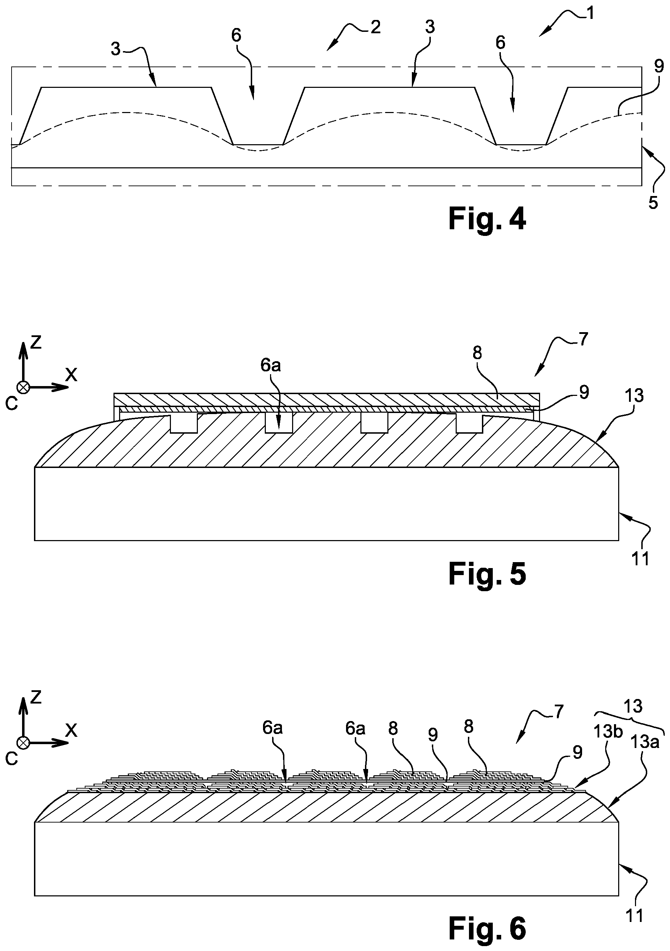

Le procédé de fabrication selon l'invention permet d'obtenir un bandage pneumatique 1 dont les blocs 3 de sculpture 2 de la bande 5 de roulement sont rigidifiés comme illustré à la figure 4. La rigidification est obtenue par une nappe 9 de renfort sensiblement une forme de voûte dans les blocs 3 de sculpture 2 afin de limiter leur déformation pour améliorer le comportement et l'usure du bandage pneumatique 1. Plus précisément, dans l'exemple de la figure 4, on peut voir que, sur la section méridienne partielle de la bande 5 de roulement (plan de coupe orienté selon les axes X-Z), la nappe 9 de renfort forme une ligne continue qui s'étend sous les fonds des rainures 6 de la sculpture 2 de la bande 5 de roulement et imprime une courbe convexe dans l'épaisseur de chaque bloc 3 entre chaque fond de rainure 6.

Pour obtenir ce bandage pneumatique 1, l'invention se rapporte à un procédé de fabrication d'un bandage pneumatique 1 comportant une étape de positionnement d'une nappe 9 de renfort dans un matériau caoutchoutique comportant des rainures 6a de façon que la nappe 9 de renfort s'étende à travers les rainures 6a puis une étape finale destinée à réticuler tout en moulant à chaud le bandage pneumatique 1 à base de matériau caoutchoutique cru en poussant la nappe 9 de renfort contre le fond des rainures 6a.

De manière inattendue, grâce au procédé selon l'invention, la nappe 9 de renfort prend une forme de voûte dans les blocs 3 de sculpture 2 sans forme dédiée du moule ou de la couche 7 de rigidification ce qui permet une rigidification sensiblement équivalente à celle décrite dans le document WO 2016/184692 sans utiliser son moule complexe ou sa géométrie de sculpture imposée. On comprend donc que le bandage pneumatique obtenu comporte des caractéristiques similaires à celles décrites dans le document WO 2016/184692 à l'aide d'un procédé plus simple et plus économique. De plus, les chutes éventuelles générées lors du procédé de fabrication sont entièrement recyclables.

Selon une première possibilité de l'invention, les rainures 6a sont formées dans une ébauche 13 de la bande 5 de roulement. Un premier mode de réalisation de la première possibilité selon l'invention est illustré aux figures 1 à 4. Selon le premier mode de réalisation, le procédé de fabrication d'un bandage pneumatique 1 comporte une première étape destinée à fabriquer une carcasse 11 à base de matériau caoutchoutique cru comme, par exemple, obtenue selon un procédé de fabrication conventionnel. À titre nullement limitatif, l'étape de fabrication de la carcasse 11 peut comporter les phases de fabrication des matériaux caoutchoutiques crus, une nappe carcasse (non visible), deux tringles (non visible), une gomme intérieure imperméable à l'air (non visible) et des nappes sommet de travail (non visible) puis de confection de la carcasse 11 à partir des matériaux caoutchoutiques crus, de la nappe carcasse, des deux tringles, de la gomme intérieure imperméable à l'air et des nappes sommet de travail.

Le procédé se poursuit avec une deuxième étape destinée à monter sur la carcasse 11, une ébauche 13 de bande 5 de roulement à base de matériau caoutchoutique cru comportant des rainures 6a afin de former une ébauche de bandage pneumatique 1 à base de matériau caoutchoutique cru.

Selon une première variante, l'étape de montage sur la carcasse 11 de l'ébauche 13 de bande 5 de roulement fabrication de la carcasse peut comporter une première phase destinée à fabriquer au moins un matériau caoutchoutique cru puis une deuxième phase destinée à monter le matériau caoutchoutique cru sur la carcasse 11 afin de former l'ébauche 13 de bande 5 de roulement comportant des rainures 6a.

Cette première variante permet d'utiliser des moyens habituels de fabrication pour former l'ébauche 13 de la bande 5 de roulement. On comprend que l'ébauche 13 aura préférentiellement une épaisseur plus faible qu'habituellement afin de former, avec la couche 7 de rigidification, l'épaisseur finale de la bande 5 de roulement avant l'étape de moulage à chaud.

Selon une deuxième variante, l'étape de montage sur la carcasse 11 de l'ébauche 13 de bande 5 de roulement comporte une première phase destinée à fabriquer au moins un matériau caoutchoutique cru puis, une deuxième phase destinée à monter, par roulages successifs de bandelettes, le matériau caoutchoutique cru sur la carcasse 11 afin de former l'ébauche 13 de bande 5 de roulement comportant des rainures 6a.

Cette deuxième variante permet l'utilisation d'un procédé du type « strip winding » qui permet, par roulages successifs de bandelettes, de former très précisément une structure comportant de la gomme crue et/ou des éléments filaires par empilements successifs. On comprend que l'ébauche 13 aura préférentiellement une épaisseur plus faible qu'habituellement afin de former avec la couche 7 de rigidification, l'épaisseur finale de la bande de roulement avant l'étape de moulage à chaud.

Bien entendu, il peut être envisagé que les première et deuxième variantes puissent être combinées afin de former une partie 13a de l'ébauche 13 avec une phase habituelle puis de former une autre partie 13b de l'ébauche 13, comme par exemple celle comportant les rainures 6a, avec une phase du type « strip winding » comme visible à la figure 6.

Le procédé selon le premier mode de réalisation de l'invention comporte ensuite une troisième étape destinée à monter une couche 7 de rigidification à base de matériau caoutchoutique 8 cru et de nappe 9 de renfort sur l'ébauche 13 de bandage pneumatique 1 afin de former un bandage pneumatique 1 à base de matériau caoutchoutique cru.

Avantageusement selon l'invention, le principe de positionner la nappe 9 de renfort avant de terminer la bande 5 de roulement permet d'avoir une profondeur maitrisée dans l'épaisseur de la bande 5 de roulement. De ce fait, la nappe 9 de renfort n'a pas à respecter une perméabilité particulière par rapport à la gomme lors de l'étape finale de moulage à chaud.

L'étape de montage de la couche 7 de rigidification selon le premier mode de réalisation peut comporter une première phase destinée à fabriquer le matériau caoutchoutique 8 cru et la nappe 9 de renfort. Le matériau caoutchoutique 8 cru peut avantageusement être une gomme habituellement utilisée pour la bande 5 de roulement. De manière similaire, la nappe 9 de renfort peut comporter des fibres habituelles à base de polymères offrant une souplesse suffisante afin de mettre en oeuvre l'étape de moulage à chaud.

Dans l'exemple des figures 1 et 2, on peut voir qu'une deuxième phase destinée à monter la nappe 9 de renfort sur l'ébauche 13 de bande 5 de roulement à l'aide de rouleaux 10 permettant de poser la nappe 9 de renfort à plat. On peut également voir une troisième phase destinée à monter le matériau caoutchoutique 8 cru sur au moins une partie de la nappe 9 de renfort.

Dans l'exemple particulier des figures 1 et 2, on peut voir que la couche 7 de rigidification est montée de sorte qu'elle ne comporte pas de matériau caoutchoutique 8 cru à l'aplomb des rainures 6a de l'ébauche 13 de la bande 5 de roulement. Cette configuration est préférée afin de maximiser la poussée de la couche 7 de rigidification par le moule 15 au fond des rainure 6a lors de l'étape finale de moulage à chaud.

Ce premier mode de réalisation permet donc le montage de la couche 7 de rigidification matériau par matériau sur l'ébauche 13 de la bande 5 de roulement. Ce premier mode de réalisation est le plus simple et le plus économique à mettre en oeuvre.

Enfin, le procédé selon le premier mode de réalisation de l'invention se termine avec l'étape finale destinée à mouler à chaud le bandage pneumatique à base de matériau caoutchoutique cru. On comprend que cette étape habituelle dans les procédés de fabrication de bandage pneumatique 1 est destinée à réaliser la vulcanisation des matériaux caoutchoutiques crus sensiblement plastiques en un ensemble homogène en matériau élastique.

Selon l'invention, comme visible à la figure 3, l'étape de moulage à chaud comporte une première phase de fermeture du moule 15 contre le bandage pneumatique 1 à base de matériau caoutchoutique cru. Durant cette première phase habituelle, le rapprochement du moule 15 vers notamment la bande 5 de roulement permet, à l'aide des empreintes négatives 16 des futures rainures 6 de la sculpture 2, de pousser la couche 7 de rigidification contre le fond des rainures 6a de l'ébauche 13 de la bande 5 de roulement. L'étape se poursuit avec une deuxième phase de vulcanisation permettant de rendre élastique le bandage pneumatique 1 et de modeler sa forme externe comme notamment la sculpture 2 de la bande 5 de roulement et le décor des flancs extérieurs (non représentés).

Ainsi dans le procédé de fabrication selon le premier mode de réalisation de la première possibilité, les rainures 6a sont formées dans l'ébauche 13 de la bande 5 de roulement. On comprend donc que la nappe 9 de renfort peut donc être directement montée en recouvrement des rainures 6a de l'ébauche 13 de la bande 5 de roulement ce qui permet de simplifier la fabrication de la couche 7 de rigidification.

De plus, de manière inattendue grâce au procédé selon l'invention, la nappe 9 de renfort prend une forme de voûte comme visible à la figure 4 dans les blocs 3 de sculpture 2 sans forme dédiée du moule 15 ou de la couche 7 de rigidification ce qui permet une rigidification sensiblement équivalente à celle décrite dans le document WO 2016/184692 sans utiliser son moule complexe ou sa géométrie de sculpture imposée. De plus, les chutes éventuelles générées lors du procédé de fabrication sont entièrement recyclables.

Selon un deuxième mode de réalisation de l'invention, le procédé de fabrication d'un bandage pneumatique 1 comporte une première étape identique à celle du premier mode de réalisation avec les mêmes effets et avantages afin de fabriquer la carcasse 11. Le procédé se poursuit avec une deuxième étape identique à celle du premier mode de réalisation avec les mêmes variantes, combinaison de variantes, effets et avantages afin de former l'ébauche de bandage pneumatique 1.

Le procédé selon le deuxième mode de réalisation de l'invention comporte ensuite une troisième étape destinée à monter une couche 7 de rigidification à base de matériau caoutchoutique 8 cru et de nappe 9 de renfort sur l'ébauche 13 de bandage pneumatique 1 afin de former un bandage pneumatique 1 à base de matériau caoutchoutique cru.

Avantageusement selon l'invention, le principe de positionner la couche 7 de rigidification avant de terminer la bande 5 de roulement permet d'avoir une profondeur maitrisée dans l'épaisseur de la bande 5 de roulement. De ce fait, la nappe 9 de renfort de la couche 7 de rigidification n'a pas à respecter une perméabilité particulière par rapport à la gomme lors de l'étape finale de moulage à chaud.

L'étape de montage de la couche 7 de rigidification selon le deuxième mode de réalisation peut comporter une première phase destinée à fabriquer le matériau caoutchoutique 8 cru et la nappe 9 de renfort. Le matériau caoutchoutique 8 cru peut avantageusement être une gomme habituellement utilisée pour la bande 5 de roulement. De manière similaire, la nappe 9 de renfort peut comporter des fibres habituelles à base de polymères offrant une souplesse suffisante afin de mettre en oeuvre l'étape de moulage à chaud.

La troisième étape se poursuit avec une deuxième phase destinée à assembler le matériau caoutchoutique 8 cru sur au moins une partie de la nappe 9 de renfort pour former une couche 7 de rigidification composite comme visible à la figure 5. On peut également voir une troisième phase destinée à monter la couche 7 de rigidification composite sur l'ébauche 13 de bande 5 de roulement.

Dans l'exemple particulier de la figure 5, on peut voir que le matériau caoutchoutique 8 cru recouvre entièrement la nappe 9 de renfort. Ce deuxième mode de réalisation permet la préparation à part de la couche 7 de rigidification pour ensuite être montée sur l'ébauche 13 de bande 5 de roulement.

Enfin, le procédé selon le deuxième mode de réalisation de l'invention se termine avec l'étape finale identique à celle du premier mode de réalisation avec les mêmes effets et avantages afin notamment de réaliser la vulcanisation des matériaux caoutchoutiques crus sensiblement plastiques en un ensemble homogène en matériau élastique.

Selon un troisième mode de réalisation de l'invention, le procédé de fabrication d'un bandage pneumatique 1 comporte une première étape identique à celle des premier et deuxième modes de réalisation avec les mêmes effets et avantages afin de fabriquer la carcasse 11. Le procédé se poursuit avec une deuxième étape identique à celle des premier et deuxième modes de réalisation avec les mêmes variantes, combinaison de variantes, effets et avantages afin de former l'ébauche 13 de bandage pneumatique 1.

Le procédé selon le troisième mode de réalisation de l'invention comporte ensuite une troisième étape destinée à monter une couche 7 de rigidification à base de matériau caoutchoutique 8 cru et de nappe 9 de renfort sur l'ébauche 13 de bandage pneumatique 1 afin de former un bandage pneumatique 1 à base de matériau caoutchoutique cru.

Avantageusement selon l'invention, le principe de positionner la nappe 9 de renfort avant de terminer la bande 5 de roulement permet d'avoir une profondeur maitrisée dans l'épaisseur de la bande 5 de roulement. De ce fait, la nappe 9 de renfort n'a pas à respecter une perméabilité particulière par rapport à la gomme lors de l'étape finale de moulage à chaud.

L'étape de montage de la couche 7 de rigidification selon le troisième mode de réalisation peut comporter une première phase destinée à fabriquer le matériau caoutchoutique 8 cru et la nappe 9 de renfort. Le matériau caoutchoutique 8 cru peut avantageusement être une gomme habituellement utilisée pour la bande 5 de roulement. De manière similaire, la nappe 9 de renfort peut comporter des fibres habituelles à base de polymères offrant une souplesse suffisante afin de mettre en œuvre l'étape de moulage à chaud.

La troisième étape se poursuit avec une deuxième phase destinée à monter la nappe 9 de renfort sur l'ébauche 13 de bande 5 de roulement comme visible à la figure 6. On peut également voir une troisième phase destinée à monter, par roulages successifs de bandelettes, le matériau caoutchoutique 8 cru sur au moins une partie de la nappe 9 de renfort.

Dans l'exemple particulier de la figure 6, on peut voir que le matériau caoutchoutique 8 cru recouvre plus la nappe 9 de renfort que dans le premier mode de réalisation sans la recouvrir totalement comme dans le deuxième mode de réalisation. On comprend donc que la valeur de recouvrement du matériau caoutchoutique 8 cru n'est pas une caractéristique essentielle de l'invention, de même qu'elle n'est pas dépendante du type de montage de la couche 7 de rigidification.

Ce troisième mode de réalisation permet l'utilisation d'un procédé du type « strip winding » qui permet, par roulages successifs de bandelettes, de former très précisément une structure comportant de la gomme crue et/ou des éléments filaires par empilements successifs comme mieux visible à la figure 6.

Enfin, le procédé selon le troisième mode de réalisation de l'invention se termine avec l'étape finale identique à celle des premier et deuxième modes de réalisation avec les mêmes effets et avantages afin notamment de réaliser la vulcanisation des matériaux caoutchoutiques crus sensiblement plastiques en un ensemble homogène en matériau élastique.

Comme expliqué ci-dessus, il peut être envisagé que les première et deuxième variantes de la deuxième étape du procédé selon l'invention puissent être combinées afin de former une partie 13a de l'ébauche 13 avec une phase habituelle puis de former une autre partie 13b de l'ébauche 13, comme par exemple celle comportant les rainures 6a, avec une phase du type « strip winding » comme visible à la figure 6. On comprend donc que, selon le troisième mode de réalisation, tout ou partie de la bande 5 de roulement crue peut être obtenue en continue à l'aide du procédé du type « strip winding », c'est-à-dire aussi bien l'étape de montage de l'ébauche 13 de bande 5 de roulement que l'étape de montage de la couche 7 de rigidification.

L'invention n'est pas limitée aux modes de réalisation et variantes présentés et d'autres modes de réalisation et variantes apparaîtront clairement à l'homme du métier. Il est notamment possible que du matériau caoutchoutique 8 cru soit également prévu entre la nappe 9 et l'ébauche 13 de la bande 5 de roulement. On comprend donc que les rainures 6a ne sont pas formées dans l'ébauche 13 de la bande 5 de roulement mais dans la partie inférieure de la couche 7 de rigidification.

À titre nullement limitatif, le procédé de fabrication d'un bandage pneumatique pourrait alors comporter, selon une autre possibilité, les étapes suivantes :
- Fabriquer une carcasse 11 à base de matériau caoutchoutique cru ;
- Monter sur la carcasse 11 une ébauche 13 de bande 5 de roulement à base de matériau caoutchoutique cru ;
- Monter une couche 7 de rigidification à base de matériau caoutchoutique 8 cru et de nappe 9 de renfort sur l'ébauche 13 de bande 5 de roulement, une couche du matériau caoutchoutique 8 cru avec une épaisseur variable formant des rainures 6a étant montée entre la nappe 9 de renfort et l'ébauche 13 de bande 5 de roulement afin de former un bandage pneumatique 1 à base de matériau caoutchoutique cru ;
- Mouler à chaud le bandage pneumatique 1 à base de matériau caoutchoutique cru en poussant la nappe 9 de renfort de la couche 7 de rigidification contre le fond des rainures 6a afin de rendre élastique le bandage pneumatique 1 et de modeler sa forme externe.

On comprend donc que les effets et avantages de l'invention seraient obtenus de manière équivalente à l'aide de cette autre possibilité.

Bien entendu, les trois modes de réalisation, variantes et combinaison de variantes pourrait être adaptés à cette autre possibilité. Ainsi, à titre d'exemple, l'étape de montage de la couche 7 de rigidification pourrait, dans un premier mode de réalisation adapté, comporter les phases suivantes :
- Fabriquer le matériau caoutchoutique 8 cru et la nappe 9 de renfort ;
- Monter la couche de matériau caoutchoutique 8 cru avec les rainures 6a sur une première face de la nappe 9 de renfort ;
- Monter la nappe 9 de renfort sur l'ébauche 13 de bande 5 de roulement de façon à ce que les rainures 6a soient montées entre la nappe 9 de renfort et l'ébauche 13 de bande 5 de roulement ;
- Monter du matériau caoutchoutique 8 cru sur au moins une partie d'une deuxième face de la nappe 7 de renfort.

De plus, l'étape de montage de la couche 7 de rigidification pourrait, dans un deuxième mode de réalisation adapté, comporter les phases suivantes :
- Fabriquer le matériau caoutchoutique 8 cru et la nappe 9 de renfort ;
- Assembler la couche de matériau caoutchoutique 8 cru avec les rainures 6a sur une première face de la nappe 9 de renfort et sur au moins une partie d'une deuxième face de la nappe 9 de renfort pour former une couche 7 de rigidification composite ;
- Monter la couche 7 de rigidification composite sur l'ébauche 13 de bande 5 de roulement de façon à ce que les rainures 6a soient montées entre la nappe 9 de renfort et l'ébauche 13 de bande 5 de roulement.

Enfin, l'étape de montage de la couche 7 de rigidification pourrait, dans un troisième mode de réalisation adapté, comporter les phases suivantes :
- Fabriquer le matériau caoutchoutique 8 cru et la nappe 9 de renfort ;
- Monter, par roulages successifs de bandelettes, la couche de matériau caoutchoutique 8 cru avec les rainures 6a sur une première face de la nappe 9 de renfort ;
- Monter la nappe 9 de renfort sur l'ébauche 13 de bande 5 de roulement de façon à ce que les rainures 6a soient montées entre la nappe 9 de renfort et l'ébauche 13 de bande 5 de roulement ;
- Monter, par roulages successifs de bandelettes, du matériau caoutchoutique 8 cru sur au moins une partie d'une deuxième face de la nappe 9 de renfort.

## Revendications

1. Procédé de fabrication d'un bandage pneumatique (1) comportant les étapes suivantes :
- positionner une nappe (9) de renfort dans un matériau caoutchoutique comportant des rainures (6a) de façon que la nappe (9) de renfort s'étende à travers les rainures (6a) ;
- réticuler par moulage à chaud le bandage pneumatique (1) à base de matériau caoutchoutique cru en poussant la nappe (9) de renfort contre le fond des rainures (6a).

2. Procédé selon la revendication précédente, comportant en outre les étapes suivantes :
- fabriquer une carcasse (11) à base de matériau caoutchoutique cru ;
- monter sur la carcasse (11), une ébauche (13) de bande (5) de roulement à base de matériau caoutchoutique cru comprenant le matériau caoutchoutique comportant les rainures (6a) ;
- monter sur l'ébauche (13) de bande (5) de roulement, une couche (7) de rigidification comportant du matériau caoutchoutique (8) cru et la nappe (9) de renfort, la nappe (9) de renfort étant intercalée entre le matériau caoutchoutique de l'ébauche (13) de bande (5) de roulement et le matériau caoutchoutique (8) de la couche (7) de rigidification.

3. Procédé selon la revendication précédente, dans lequel l'étape de montage de la couche (7) de rigidification comporte les phases suivantes :
- fabriquer le matériau caoutchoutique (8) cru et la nappe (9) de renfort ;
- monter la nappe (9) de renfort sur l'ébauche (13) de bande (5) de roulement ;
- monter le matériau caoutchoutique (8) cru sur au moins une partie de la nappe (9) de renfort.

4. Procédé selon la revendication 2, dans lequel l'étape de montage de la couche (7) de rigidification comporte les phases suivantes :
- fabriquer le matériau caoutchoutique (8) cru et la nappe (9) de renfort ;
- assembler le matériau caoutchoutique (8) cru sur au moins une partie de la nappe (9) de renfort pour former une couche (7) de rigidification composite ;
- monter la couche (7) de rigidification composite sur l'ébauche (13) de bande (5) de roulement.

5. Procédé selon la revendication 2, dans lequel l'étape de montage de la couche (7) de rigidification comporte les phases suivantes :
- fabriquer le matériau caoutchoutique (8) cru et la nappe (9) de renfort ;
- monter la nappe (9) de renfort sur l'ébauche (13) de bande (5) de roulement ;
- monter, par roulages successifs de bandelettes, le matériau caoutchoutique (8) cru sur au moins une partie de la nappe (9) de renfort.

6. Procédé selon la revendication 1, comportant en outre les étapes suivantes :
- fabriquer une carcasse (11) à base de matériau caoutchoutique cru ;
- monter sur la carcasse (11), une ébauche (13) de bande (5) de roulement à base de matériau caoutchoutique cru ;
- monter sur l'ébauche (13) de bande de roulement, une couche (7) de rigidification comprenant le matériau caoutchoutique comportant les rainures (6a), du matériau caoutchoutique (8) cru et la nappe (9) de renfort, la nappe (9) de renfort étant intercalée entre le matériau caoutchoutique comportant les rainures (6a) et le matériau caoutchoutique (8) de la couche (7) de rigidification ;

7. Procédé selon la revendication précédente, dans lequel l'étape de montage de la couche (7) de rigidification comporte les phases suivantes :
- fabriquer le matériau caoutchoutique (8) cru et la nappe (9) de renfort ;
- monter la couche de matériau caoutchoutique cru avec les rainures (6a) sur une première face de la nappe (9) de renfort ;
- monter la nappe (9) de renfort sur l'ébauche (13) de bande (5) de roulement de façon à ce que les rainures (6a) soient montées entre la nappe (9) de renfort et l'ébauche (13) de bande (5) de roulement ;
- monter du matériau caoutchoutique (8) cru sur au moins une partie d'une deuxième face de la nappe (9) de renfort.

8. Procédé selon la revendication 6, dans lequel l'étape de montage de la couche (7) de rigidification comporte les phases suivantes :
- fabriquer le matériau caoutchoutique (8) cru et la nappe (9) de renfort ;
- assembler la couche de matériau caoutchoutique cru avec les rainures (8) sur une première face de la nappe (9) de renfort et sur au moins une partie d'une deuxième face de la nappe (9) de renfort pour former une couche (7) de rigidification composite ;
- monter la couche (7) de rigidification composite sur l'ébauche (13) de bande (5) de roulement de façon à ce que les rainures (6a) soient montées entre la nappe (9) de renfort et l'ébauche (13) de bande (5) de roulement.

9. Procédé selon la revendication 6, dans lequel l'étape de montage de la couche (7) de rigidification comporte les phases suivantes :
- fabriquer le matériau caoutchoutique (8) cru et la nappe (9) de renfort ;
- monter, par roulages successifs de bandelettes, la couche de matériau caoutchoutique (8) cru avec les rainures (6a) sur une première face de la nappe (9) de renfort ;
- monter la nappe (9) de renfort sur l'ébauche (13) de bande (5) de roulement de façon à ce que les rainures (6a) soient montées entre la nappe (9) de renfort et l'ébauche (13) de bande (5) de roulement ;
- monter, par roulages successifs de bandelettes, du matériau caoutchoutique (8) cru sur au moins une partie d'une deuxième face de la nappe (9) de renfort.

10. Procédé selon l'une quelconque des revendications précédentes, dans lequel la couche (7) de rigidification est montée de sorte qu'elle ne comporte pas de matériau caoutchoutique (8) cru à l'aplomb des rainures (6a).

11. Procédé selon l'une quelconque des revendications précédentes, dans lequel la nappe (9) de renfort comporte des fibres à base de polymères.

12. Procédé selon l'une quelconque des revendications 2 à 11, dans lequel l'étape de montage sur la carcasse (11) de l'ébauche (13) de bande (5) de roulement comporte les phases suivantes :
- fabriquer au moins un matériau caoutchoutique cru ;
- monter le matériau caoutchoutique cru sur la carcasse (11) afin de former l'ébauche (13) de bande (5) de roulement.

13. Procédé selon l'une quelconque des revendications 2 à 11, dans lequel l'étape de montage sur la carcasse (11) de l'ébauche (13) de bande (5) de roulement comporte les phases suivantes :
- fabriquer au moins un matériau caoutchoutique cru ;
- monter, par roulages successifs de bandelettes, le matériau caoutchoutique cru sur la carcasse (11) afin de former l'ébauche (13) de bande (5) de roulement.

## Patentansprüche

1. Verfahren zur Herstellung eines Luftreifens (1), das die folgenden Schritte umfasst:
- Positionieren einer Verstärkungslage (9) in einem Gummimaterial mit Rillen (6a), so dass sich die Verstärkungslage (9) durch die Rillen (6a) erstreckt;
- Vernetzen des Luftreifens (1) auf der Basis von Rohgummimaterial durch Heißformen, wobei die Verstärkungslage (9) gegen den Boden der Rillen (6a) gedrückt wird.

2. Verfahren nach dem vorangehenden Anspruch, das ferner die folgenden Schritte umfasst:
- Herstellen einer Karkasse (11) aus Rohgummimaterial;
- Anbringen eines Rohlings (13) eines Laufstreifens (5) auf der Basis von Rohgummimaterial, der das Gummimaterial mit den Rillen (6a) umfasst, auf der Karkasse (11);
- Anbringen einer Versteifungsschicht (7), die Rohgummimaterial (8) umfasst, und der Verstärkungslage (9) auf dem Rohling (13) des Laufstreifens (5), wobei die Verstärkungslage (9) zwischen das Gummimaterial des Rohlings (13) des Laufstreifens (5) und das Gummimaterial (8) der Versteifungsschicht (7) eingefügt ist.

3. Verfahren nach dem vorangehenden Anspruch, wobei der Schritt des Anbringens der Versteifungsschicht (7) die folgenden Phasen umfasst:
- Herstellen des Rohgummimaterials (8) und der Verstärkungslage (9);
- Anbringen der Verstärkungslage (9) auf dem Rohling (13) des Laufstreifens (5);
- Anbringen des Rohgummimaterials (8) auf zumindest einem Teil der Verstärkungslage (9).

4. Verfahren nach Anspruch 2, wobei der Schritt des Anbringens der Versteifungsschicht (7) die folgenden Phasen umfasst:
- Herstellen des Rohgummimaterials (8) und der Verstärkungslage (9);
- Zusammenfügen des Rohgummimaterials (8) mit zumindest einem Teil der Verstärkungslage (9), um eine zusammengesetzte Versteifungsschicht (7) auszubilden;
- Anbringen der zusammengesetzten Versteifungsschicht (7) auf dem Rohling (13) des Laufstreifens (5).

5. Verfahren nach Anspruch 2, wobei der Schritt des Anbringens der Versteifungsschicht (7) die folgenden Phasen aufweist:
- Herstellen des Rohgummimaterials (8) und der Verstärkungslage (9);
- Anbringen der Verstärkungslage (9) auf dem Rohling (13) des Laufstreifens (5);
- Anbringen des Rohgummimaterials (8) auf zumindest einem Teil der Verstärkungslage (9) durch aufeinanderfolgendes Rollen von Streifen.

6. Verfahren nach Anspruch 1, das ferner die folgenden Schritte umfasst:
- Herstellen einer Karkasse (11) aus Rohgummimaterial;
- Anbringen eines Rohlings (13) eines Laufstreifens (5) auf der Basis von Rohgummimaterial auf der Karkasse (11);
- Anbringen einer Versteifungsschicht (7), die das Gummimaterial mit den Rillen (6a), Rohgummimaterial (8) und die Verstärkungslage (9) umfasst, auf dem Rohling (13) des Laufstreifens, wobei die Verstärkungslage (9) zwischen das Gummimaterial mit den Rillen (6a) und das Gummimaterial (8) der Versteifungsschicht (7) eingefügt ist.

7. Verfahren nach dem vorangehenden Anspruch, wobei der Schritt des Anbringens der Versteifungsschicht (7) die folgenden Phasen umfasst:
- Herstellen des Rohgummimaterials (8) und der Verstärkungslage (9);
- Anbringen der Schicht aus Rohgummimaterial mit den Rillen (6a) auf einer ersten Seite der Verstärkungslage (9);
- Anbringen der Verstärkungslage (9) auf dem Rohling (13) des Laufstreifens (5), so dass die Rillen (6a) zwischen der Verstärkungslage (9) und dem Rohling (13) des Laufstreifens (5) angebracht sind;
- Anbringen des Rohgummimaterials (8) auf zumindest einem Teil einer zweiten Seite der Verstärkungslage (9).

8. Verfahren nach Anspruch 6, wobei der Schritt des Anbringens der Versteifungsschicht (7) die folgenden Phasen umfasst:
- Herstellen des Rohgummimaterials (8) und der Verstärkungslage (9);
- Zusammenfügen der Schicht aus Rohgummimaterial mit den Rillen (8) mit einer ersten Seite der Verstärkungslage (9) und mit zumindest einem Teil einer zweiten Seite der Verstärkungslage (9), um eine zusammengesetzte Versteifungsschicht (7) auszubilden;
- Anbringen der zusammengesetzten Versteifungsschicht (7) auf dem Rohling (13) des Laufstreifens (5), so dass die Rillen (6a) zwischen der Verstärkungslage (9) und dem Rohling (13) des Laufstreifens (5) angebracht sind.

9. Verfahren nach Anspruch 6, wobei der Schritt des Anbringens der Versteifungsschicht (7) die folgenden Phasen umfasst:
- Herstellen des Rohgummimaterials (8) und der Verstärkungslage (9);
- Anbringen der Schicht von Rohgummimaterial (8) mit den Rillen (6a) auf einer ersten Seite der Verstärkungslage (9) durch aufeinanderfolgendes Rollen von Streifen;
- Anbringen der Verstärkungslage (9) auf dem Rohling (13) des Laufstreifens (5), so dass die Rillen (6a) zwischen der Verstärkungslage (9) und dem Rohling (13) des Laufstreifen (5) angebracht sind;
- Anbringen des Rohgummimaterials (8) auf zumindest einem Teil einer zweiten Seite der Verstärkungslage (9) durch aufeinanderfolgendes Rollen von Streifen.

10. Verfahren nach einem der vorangehenden Ansprüche, wobei die Versteifungsschicht (7) so angebracht wird, dass sie senkrecht zu den Rillen (6a) kein Rohgummimaterial (8) aufweist.

11. Verfahren nach einem der vorangehenden Ansprüche, wobei die Verstärkungslage (9) Fasern auf Polymerbasis umfasst.

12. Verfahren nach einem der Ansprüche 2 bis 11, wobei der Schritt des Anbringens des Rohlings (13) des Laufstreifens (5) auf der Karkasse (11) die folgenden Phasen umfasst:
- Herstellen zumindest eines Rohgummimaterials;
- Anbringen des Rohgummimaterials auf der Karkasse (11), um den Rohling (13) des Laufstreifens (5) auszubilden.

13. Verfahren nach einem der Ansprüche 2 bis 11, wobei der Schritt des Anbringens des Rohlings (13) des Laufstreifens (5) auf der Karkasse (11) die folgenden Phasen aufweist:
- Herstellen zumindest eines Rohgummimaterials;
- Anbringen des Rohgummimaterials auf der Karkasse (11) durch aufeinanderfolgendes Rollen von Streifen, um den Rohling (13) des Laufstreifens (5) auszubilden.

## Claims

1. Method for manufacturing a tyre (1), having the following steps of:
- positioning a reinforcing ply (9) in a rubber material having grooves (6a) such that the reinforcing ply (9) extends through the grooves (6a);
- crosslinking the tyre (1) based on uncured rubber material by hot moulding the latter, with the reinforcing ply (9) being pushed against the bottom of the grooves (6a).

2. Method according to the preceding claim, also having the following steps of:
- manufacturing a carcass (11) based on uncured rubber material;
- mounting on the carcass (11) a green form (13) of tread (5) based on uncured rubber material comprising the rubber material having the grooves (6a);
- mounting on the green form (13) of tread (5) a stiffening layer (7) having uncured rubber material (8) and the reinforcing ply (9), the reinforcing ply (9) being interposed between the rubber material of the green form (13) of tread (5) and the rubber material (8) of the stiffening layer (7).

3. Method according to the preceding claim, wherein the step of mounting the stiffening layer (7) has the following phases of:
- manufacturing the uncured rubber material (8) and the reinforcing ply (9);
- mounting the reinforcing ply (9) on the green form (13) of tread (5);
- mounting the uncured rubber material (8) on at least a part of the reinforcing ply (9).

4. Method according to Claim 2, wherein the step of mounting the stiffening layer (7) has the following phases of:
- manufacturing the uncured rubber material (8) and the reinforcing ply (9);
- assembling the uncured rubber material (8) on at least a part of the reinforcing ply (9) so as to form a composite stiffening layer (7);
- mounting the composite stiffening layer (7) on the green form (13) of tread (5).

5. Method according to Claim 2, wherein the step of mounting the stiffening layer (7) has the following phases of:
- manufacturing the uncured rubber material (8) and the reinforcing ply (9);
- mounting the reinforcing ply (9) on the green form (13) of tread (5);
- mounting the uncured rubber material (8) on at least a part of the reinforcing ply (9) by successive winding of strips.

6. Method according to Claim 1, also having the following steps of:
- manufacturing a carcass (11) based on uncured rubber material;
- mounting on the carcass (11) a green form (13) of tread (5) based on uncured rubber material;
- mounting on the green form (13) of tread a stiffening layer (7) comprising the rubber material having the grooves (6a), uncured rubber material (8) and the reinforcing ply (9), the reinforcing ply (9) being interposed between the rubber material having the grooves (6a) and the rubber material (8) of the stiffening layer (7).

7. Method according to the preceding claim, wherein the step of mounting the stiffening layer (7) has the following phases of:
- manufacturing the uncured rubber material (8) and the reinforcing ply (9);
- mounting the layer of uncured rubber material with the grooves (6a) on a first face of the reinforcing ply (9);
- mounting the reinforcing ply (9) on the green form (13) of tread (5) such that the grooves (6a) are mounted between the reinforcing ply (9) and the green form (13) of tread (5);
- mounting uncured rubber material (8) on at least a part of a second face of the reinforcing ply (9).

8. Method according to Claim 6, wherein the step of mounting the stiffening layer (7) has the following phases of:
- manufacturing the uncured rubber material (8) and the reinforcing ply (9);
- assembling the layer of uncured rubber material with the grooves (8) on a first face of the reinforcing ply (9) and on at least a part of a second face of the reinforcing ply (9) so as to form a composite stiffening layer (7);
- mounting the composite stiffening layer (7) on the green form (13) of tread (5) such that the grooves (6a) are mounted between the reinforcing ply (9) and the green form (13) of tread (5).

9. Method according to Claim 6, wherein the step of mounting the stiffening layer (7) has the following phases of:
- manufacturing the uncured rubber material (8) and the reinforcing ply (9);
- mounting the layer of uncured rubber material (8) with the grooves (6a) on a first face of the reinforcing ply (9) by successive winding of strips;
- mounting the reinforcing ply (9) on the green form (13) of tread (5) such that the grooves (6a) are mounted between the reinforcing ply (9) and the green form (13) of tread (5);
- mounting uncured rubber material (8) on at least a part of a second face of the reinforcing ply (9) by successive winding of strips.

10. Method according to any one of the preceding claims, wherein the stiffening layer (7) is mounted such that it does not have uncured rubber material (8) vertically in line with the grooves (6a).

11. Method according to any one of the preceding claims, wherein the reinforcing ply (9) has polymer-based fibres.

12. Method according to any one of Claims 2 to 11, wherein the step of mounting the green form (13) of tread (5) on the carcass (11) has the following phases of:
- manufacturing at least one uncured rubber material;
- mounting the uncured rubber material on the carcass (11) so as to form the green form (13) of tread (5).

13. Method according to any one of Claims 2 to 11, wherein the step of mounting the green form (13) of tread (5) on the carcass (11) has the following phases of:
- manufacturing at least one uncured rubber material;
- mounting the uncured rubber material on the carcass (11) so as to form the green form (13) of tread (5) by successive winding of strips.
